# EUROPEAN PATENT SPECIFICATION

(11) **EP 1 150 896 B1**
(45) Date of publication and mention of the grant of the patent: **14.08.2002**
(21) Application number: 99954350.7
(22) Date of filing: 22.10.1999
(51) Int. Cl.: B65D 47/08

(54) **COSMETIC PRODUCT CONTAINER AND METHOD FOR MAKING IT**
BEHÄLTER FÜR EIN KOSMETISCHES PRODUKT UND VERFAHREN ZU SEINER HERSTELLUNG
RECIPIENT POUR PRODUIT COSMETIQUE ET SON PROCEDE DE FABRICATION

(30) Priority: 04.02.1999 IT MI990216
(43) Date of publication of application: 07.11.2001
(73) Proprietor: Gibo Italia S.R.L., 20026 Novate Milanese (IT)
(72) Inventor: BOCOLA, Giovanni, I-20026 Novate Milanese (IT)
(74) Representative: Cicogna, Franco
(86) International application number: IT9900338
(87) International publication number: WO0046119

(56) References cited:
- EP-A- 0 302 702
- EP-A- 0 689 999
- US-A- 3 587 944
- US-A- 5 662 245

## Description

### BACKGROUND OF THE INVENTION

The present invention relates to a cosmetic product container according to the preamble of claim 1 and a method for making it according to the preamble of claim 6.

As is known, cosmetic products such as creams, of the paste or fluid type, solar oils, bath products and so on, are conventionally contained in a lot of different containers such as jars, small bottles or tubes, made of a lot of different materials, such as plastic materials or glass.

Prior cosmetic product containers, however, are conventionally made by combining two or more distinct pieces, and, in particular, they comprise a container body and a respective covering element, which is frequently threaded on the body of the container.

This approach, in which two or more discrete elements must be coupled to one another to provide a finished container, is not considered as satisfactory, from an economic standpoint, since it would be desirable to reduce as far as possible the making and assembling cost of the above mentioned containers, before filling said containers with the cosmetic product to be held therein.

In this connection it should be pointed out that the above mentioned problems are further compounded in all the cases in which, because of the nature of the cosmetic product to be handled, it is necessary to also provide an intermediate element, including a throughgoing hole, for providing a metered delivery of the liquid or semi-liquid cosmetic products, which further complicates the container construction.

From the above, it should be apparent that it would be desirable to provide a cosmetic product container allowing to solve the above mentioned problems.

The document US 5662245 discloses a container with an integrally moldent closure according to the preamble of claim 1.

### SUMMARY OF THE INVENTION

Accordingly, the aim of the present invention is to provide a cosmetic product container which is made as a single piece in a bi-component or bi-material embodiment thereof.

The above mentioned aim, as well as further objects which will become more apparent hereinafter, are achieved by a cosmetic product container according to claim 1.

According to claim 3, the container body or top portion is open at the end portion thereof opposite to the covering element, thereby said container body can be easily coupled to a bottle or tube.

In this connection it should be pointed out that an opened configuration of the container body or top portion would provide actually a top portion of a container allowing a bottle or tube to be associated therewith to be easily made by a blow molding operation, to form a closed container.

According to claim 5, between the container body and covering element a perforated flat element is arranged, in turn coupled to said container body by a second hinge, the assembly being made as a single piece by bi-injecting two different components.

Alternately, the container body or top portion is closed, at the end portion thereof opposite to said covering element, thereby forming the overall container and providing a jar configuration.

The present invention relates moreover to a method for making a cosmetic product vessel, according to claim 6 and 7.

### BRIEF DESCRIPTION OF THE DRAWINGS

Further advantages and characteristics of the present invention will become more apparent hereinafter from the following detailed disclosure, provided by way of an illustrative, but not limitative example, with reference to the accompanying drawings, where:
Figure 1 is a cross-sectional view of a cream jar according to a first embodiment of the present invention, in an open configuration thereof;
Figure 2 is a cross-sectional view illustrating the cream jar of Figure 1, in a closed configuration or condition thereof;
Figure 3 is a side view of the cream jar shown in Figures 1-2, in an open configuration or condition thereof;
Figure 4 is an axonometric view illustrating a capsule which can be coupled to containers of vial or tube configuration, according to another embodiment of the present invention;
Figure 5 is a further axonometric view of a capsule coupled to a vial or small bottle according to a modified embodiment of the present invention;
Figure 6 is a cross-sectional view illustrating a detail showing a possible embodiment of a hinge according to the present invention;
Figure 7 is a partially cross-sectioned view illustrating the capsule of Figure 5, in an open condition thereof;
Figure 8 is a further partially cross-sectioned view illustrating the capsule of Figure 5, in a closed condition thereof;
Figure 9 is yet another partially cross-sectioned view illustrating the capsule of Figure 5, coupled to a tube, in a closed condition thereof;
   and
Figure 10 is a side view of a tube provided with a capsule according to the present invention.

### DESCRIPTION OF THE PREFERRED EMBODIMENTS

In the following disclosure, reference will be made to some preferred embodiments of the present invention, which are illustrated, by way of a non limitative example for disclosing different possible variations of the invention.

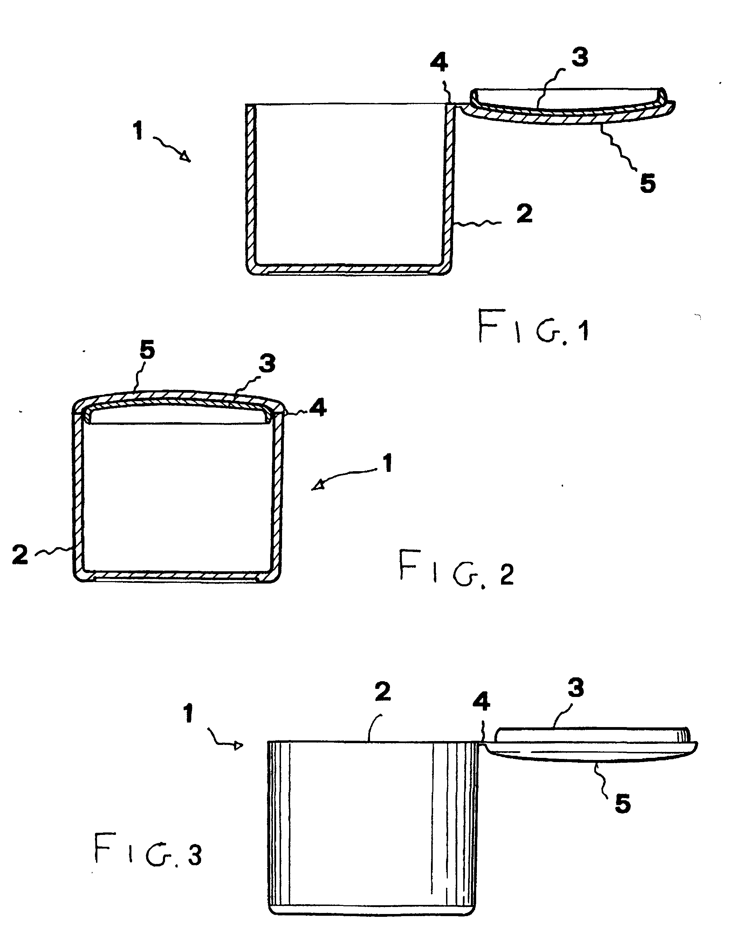

A first exemplary embodiment of the cosmetic product container according to the present invention is shown in Figures 1-3 and is generally indicated by the reference number 1.

According to this embodiment, the cosmetic product container comprises a container body 2, for holding therein a set cosmetic product, and a covering element 5.

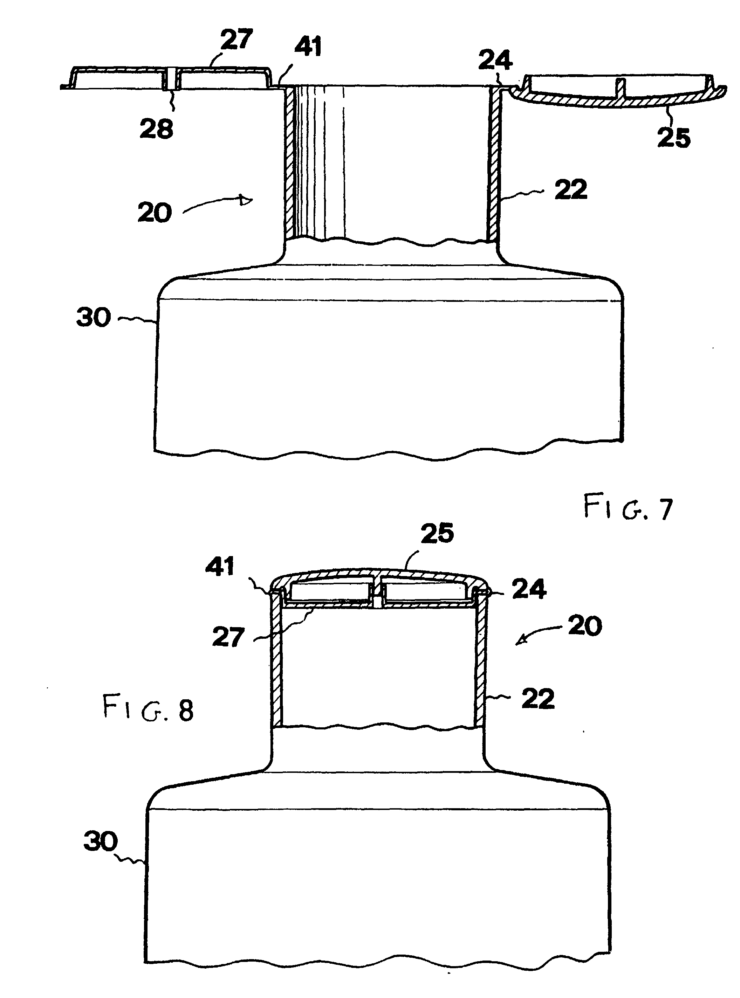

The container body 2 and covering element 5 are made in a single piece, by injecting a first component, and are coupled to one another by a hinge 4, which hinge can be formed either by a substantially flat strip element (4,14,24) or by a flat strip element having a ribbed end portion, as in fig. 6, to be engaped in the container body or top portion as the container cover is closed.

Moreover, to the covering element 5 a gasket or seal 3 is applied, said gasket being made of a component or material different from that of the assembly constituted by the covering element 5 and container body 2.

In this connection, it should be pointed out that the gasket 3 and the covering element 5 and container body 2 are made by bi-injecting two different components on materials.

As shown, the container body 2 is closed at the end thereof opposite to said covering element 5, so as to provide a jar 1.

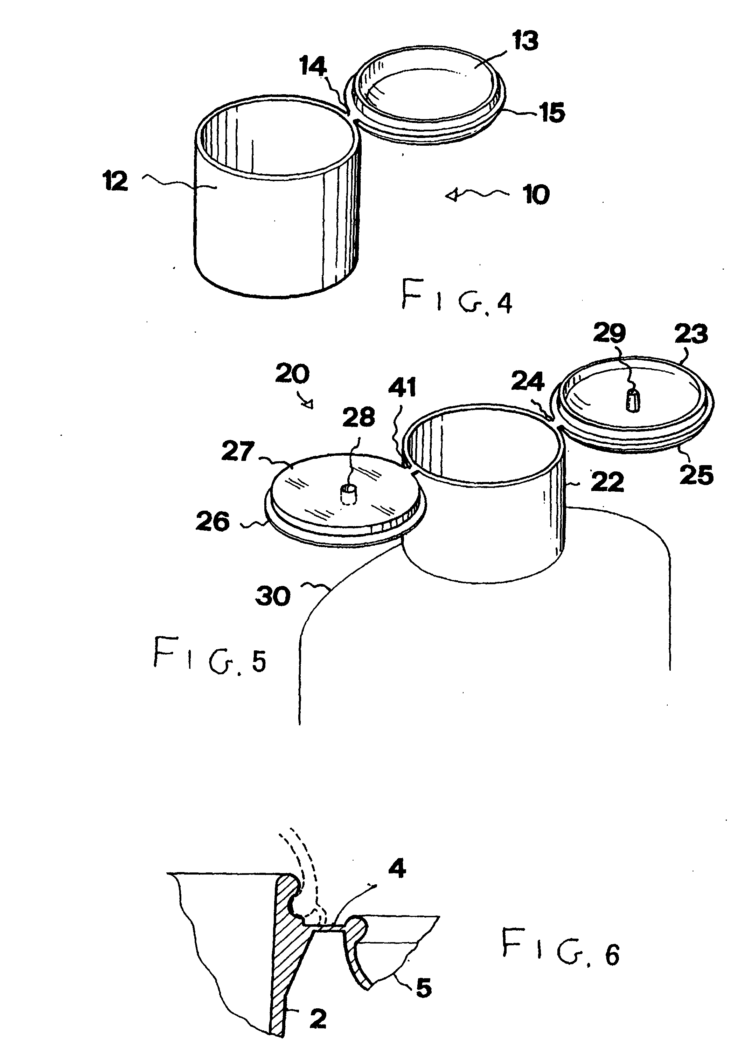

A second embodiment of the invention is illustrated in Figure 4 and generally indicated by the reference number 10; in this embodiment, the container body 12 is open at the end thereof opposite to the covering element 15, in turn provided with a gasket 13.

Thus, the container body 12 can be coupled to a vial or bottle 30 or to a tube 40.

Also in this embodiment, the container body 12 and covering element 15 are made in a single piece by bi-injecting a first single component and are coupled to one another by a hinge 14.

According to this embodiment, the open container body 12 would allow to provide, by a blow-molding operation, the vial or bottle 30 associated therewith, as is shown in Figure 5, or a tube 40, as is shown in Figures 9-10.

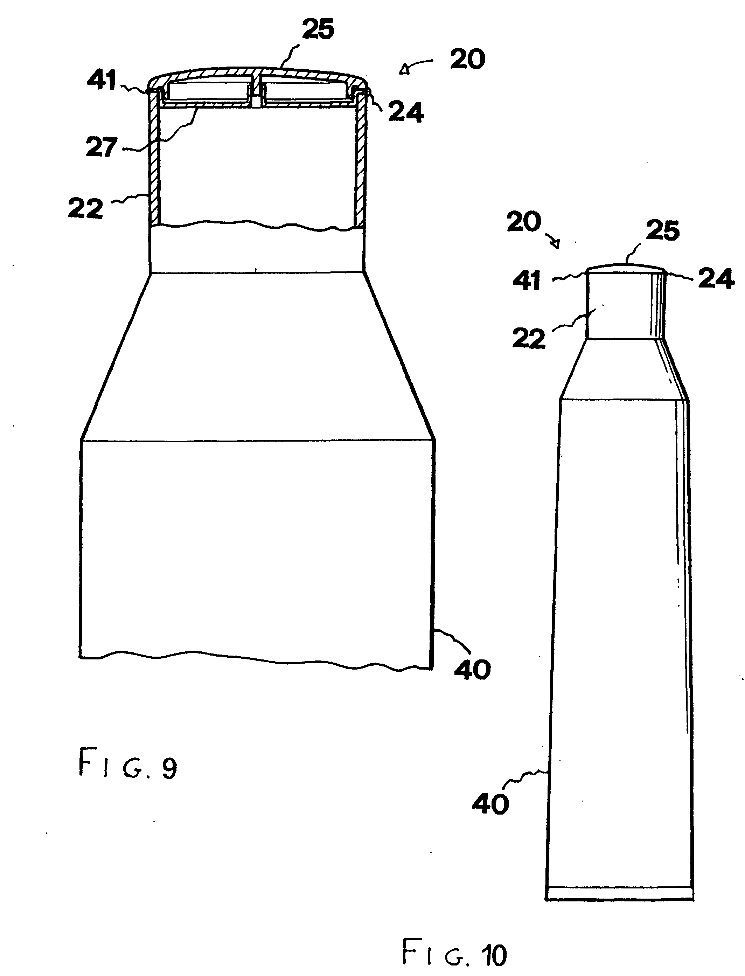

According to a further embodiment of the invention, as shown in Figures 5 and 7-9, and generally indicated by the reference number 20, between the container body 22 and covering element 25 is arranged a flat element 26, provided with a throughgoing hole 28 and a gasket 27.

Said flat element 26 is in turn coupled to the container body 22 by a hinge 41, the container body 22 and covering element 25 being coupled by a hinge 24.

Also in this embodiment, the device 20 is made as a single piece, by bi-injecting two different components, in the case in which the disclosed gasket elements must be made.

The present invention further relates to a method for making cosmetic product containers.

At first, the cream jars 1 can be made starting from two different components, by using a bi-injection apparatus.

In the case of the vials 30 or of the tubes 40, they can be made by a making method comprising a first bi-injection step and a second blowing step.

The first bi-injection step can be carried out by a bi-component material, as already disclosed, and depending on the result to be obtained with reference to the materials forming the finished products.

The blowing step will define the type of the finished product, which can comprise either a vial 30 or a tube 40.

This would mean that, with a same bi-injection pre-mold it would be possible to make, by blowing, different types of vials or bottles 30 and/or tubes 40 having the same volume or slightly different volumes.

From the above disclosure it should be apparent that the invention fully achieves the intended objects.

## Claims

1. A cosmetic product container (1), comprising a container body (2) and at least a covering element (5), said container body (2) and covering element (5) being made as a single piece of a first material and being coupled to one another by a hinge (4), said covering element being provided with a gasket, **characterized in that** said gasket (3) is made of a second material different from said first material and that said container body, said covering element and said gasket are made by bi-injecting said first and second materials respectively, thereby providing a single piece container body, covering element and sealing gasket container assembly.

2. A cosmetic product container (1), according to Claim 1, **characterized in that** said container body (2) is closed at a bottom end thereof opposite to said covering element (5) thereby providing a jar container (2).

3. A cosmetic product container, according to Claim 1, **characterized in that** said container body (2) is open at bottom portion thereof opposite to said covering element (5), to be coupled to a vial (30) or a tube (40).

4. A cosmetic product container, according to Claim 3, **characterized in that** said vial (30) or tube (40) are made by a blow molding process.

5. A cosmetic product container, according to 1, **characterized in that** between said container body (2) and said covering element (5) is arranged a perforated flat element (26), coupled to said container body (2) by a second hinge (41), in a single piece with said container body.

6. A method for making a cosmetic product container, according to Claim 1 and 2, said method being **characterized in that** it comprises a step of bi-injecting a first material for making an assembly constituted by a container body (2) and a covering element (5), which are coupled to one another by a hinge (4, 41), and a second material, different from said first material, for forming a gasket (3) for tightly sealing said container body (2) and covering element (5).

7. A method according to Claim 6, wherein said container body (2) is formed open at the end thereof opposite to said covering element (5), **characterized in that** said method comprises a further step of blow-molding a cosmetic product vial (30) or tube to be coupled to said container body (2).

## Patentansprüche

1. Behälter (1) für ein kosmetisches Produkt, der einen Behälterkörper (2) und mindestens ein Abdeckelement (5) umfaßt, wobei der Behälterkörper (2) und das Abdeckelement (5) einstückig aus einem ersten Material hergestellt und mittels eines Scharniers (4) miteinander verbunden sind, und wobei das Abdeckelement mit einer Dichtung versehen ist, **dadurch gekennzeichnet, daß**
die Dichtung (3) aus einem zweiten, sich von dem ersten Material unterscheidenden Material hergestellt ist und der Behälterkörper, das Abdeckelement und die Dichtung jeweils durch Zweifach-Einspritzung des ersten und zweiten Materials hergestellt sind, wodurch eine einstückige Behälterkörper-, Abdeckelement- und Dichtungs-Behälterbaugruppe bereitgestellt wird.

2. Behälter (1) für ein kosmetisches Produkt nach Anspruch 1,
**dadurch gekennzeichnet, daß**
der Behälterkörper (2) an seinem dem Abdeckelement (5) gegenüberliegenden unteren Ende geschlossen ist und dadurch einen topfförmigen Behälter (2) bereitstellt.

3. Behälter für ein kosmetisches Produkt nach Anspruch 1,
**dadurch gekennzeichnet, daß**
der Behälterkörper (2) an seinem dem Abdeckelement (5) gegenüberliegenden unteren Ende verschlossen ist, um mit einer Flasche (30) oder einer Tube (40) verbunden zu werden.

4. Behälter für ein kosmetisches Produkt nach Anspruch 3,
**dadurch gekennzeichnet, daß**
die Flasche (30) oder Tube (40) mittels eines Blasformverfahrens hergestellt ist.

5. Behälter für ein kosmetisches Produkt nach Anspruch 1,
**dadurch gekennzeichnet, daß**
zwischen dem Behälterkörper (2) und dem Abdeckelement (5) ein perforiertes flaches Element (26) angeordnet ist, das mittels eines zweiten Scharniers (41) einstückig mit dem Behälterkörper verbunden ist.

6. Verfahren zur Herstellung eines Behälters für ein kosmetisches Produkt nach Anspruch 1 und 2,
**dadurch gekennzeichnet, daß**
es einen Schritt der Zweifach-Einspritzung eines ersten Materials zur Herstellung einer aus einem Behälterkörper (2) und einem Abdeckelement (5) bestehenden Baugruppe, die mittels eines Scharniers (4,41) miteinander verbunden sind, und eines sich von dem ersten Material unterscheidenden zweiten Materials zur Bildung einer Dichtung (3) zur festen Abdichtung des Behälterkörpers (2) und des Abdeckelementes (5) umfaßt.

7. Verfahren nach Anspruch 6, bei welchem der Behälterkörper (2) an seinem dem Abdeckelement (5) gegenüberliegenden Ende offen ausgebildet ist,
**dadurch gekennzeichnet, daß**
das Verfahren einen weiteren Schritt der Blasformung einer Flasche (30) für ein mit dem Behälterkörper (2) verbindbares kosmetisches Produkt oder Tube umfaßt.

## Revendications

1. Récipient pour produit cosmétique (1), comprenant un corps de récipient (2) et au moins un élément de recouvrement (5), ledit corps de récipient (2) et ledit élément de recouvrement (5) étant constitués d'une seule pièce d'un premier matériau et étant couplés l'un à l'autre par une articulation (4), ledit élément de recouvrement étant muni d'un joint, **caractérisé en ce que** ledit joint (3) est fabriqué en un second matériau différent du premier matériau et dudit corps de récipient, ledit élément de recouvrement et ledit joint sont fabriqués par bi-injection desdits premier et second matériaux respectivement, de ce fait fournissant une seule pièce de corps de récipient, un élément de recouvrement et un assemblage du récipient de joint d'étanchéité.

2. Récipient pour produit cosmétique, selon la revendication 1, **caractérisé en ce que** ledit corps du récipient (2) est une extrémité de fond de celui-ci, opposée audit élément de recouvrement (5) de ce fait fournissant un récipient de type bocal (2).

3. Récipient pour produit cosmétique, selon la revendication 1, **caractérisé en ce que** ledit corps de récipient (2) est ouvert au niveau de la partie de fond de celui-ci, à l'opposé dudit élément de recouvrement (5), pour être couplé à un flacon (30) ou à un tube (40).

4. Récipient pour produit cosmétique, selon la revendication 3, **caractérisé en ce que** ledit flacon (30) ou tube (40) est fabriqué par un procédé de moulage par soufflage.

5. Récipient pour produit cosmétique, selon la revendication 1, **caractérisé en ce que** entre ledit corps de récipient (2) et ledit élément de recouvrement (5), est disposé un élément plat perforé (26), couplé audit corps de récipient (2) par une seconde articulation (41), formant une seule pièce avec ledit corps de récipient.

6. Procédé pour fabriquer un récipient pour produit cosmétique, selon les revendications 1 et 2, ledit procédé étant **caractérisé en ce qu'**il comprend une étape de bi-injection d'un premier matériau pour fabriquer un assemblage constitué par un corps de récipient (2) et par un élément de recouvrement (5), qui sont couplés l'un à l'autre par une articulation (4, 41), et un second matériau, différent dudit premier matériau, afin de former un joint (3) pour sceller solidement ledit corps de récipient (2) ainsi que ledit élément de recouvrement.

7. Procédé selon la revendication 6, dans lequel ledit corps de récipient (2) est formé en position ouverte à l'extrémité de celui-ci, à l'opposé dudit élément de recouvrement (5), **caractérisé en ce que** ledit procédé comprend une étape supplémentaire de moulage par soufflage d'un flacon (30) ou tube pour produit cosmétique afin qu'il soit couplé audit corps de récipient.
